# EUROPÄISCHE PATENTANMELDUNG

(11) **EP 1 976 026 A2**
(43) Veröffentlichungstag der Anmeldung: **01.10.2008**
(21) Anmeldenummer: 08102623.9
(22) Anmeldetag: 14.03.2008
(51) Int. Cl.: H01L 31/048

(54) **Paneldose**

(30) Priorität: 28.03.2007 DE 102007015316; 02.05.2007 DE 102007020846
(71) Anmelder: Günther Spelsberg GmbH & Co. KG, 58579 Schalksmühle (DE); Multi-Contact AG, 4123 Allschwil (CH)
(72) Erfinder: Gerull, Walter, 58579, Schalksmühle (DE); Bürge-Allenspach, Anton, 4466, Ormalingen (CH)
(74) Vertreter: Michalski Hüttermann & Partner Patentanwälte

(57) **Zusammenfassung**

Die Erfindung betrifft eine Paneldose, zum elektrischen Anschluß eines Photovoltaik-Moduls für eine Solaranlage, mit einer Anschlußeinrichtung (6) zum elektrischen Anschließen eines Anschlußkabels (3) und mit einer Verbindungseinrichtung (8) zum elektrischen Kontaktieren einer Anschlußleitung des Photovoltaik-Moduls mit der Anschlußeinrichtung (6). Erfindungsgemäß ist vorgesehen, daß die Anschlußeinrichtung (6) als Kontaktbalken ausgebildet ist und daß die Verbindungseinrichtung (8) als Federklammer ausgebildet ist, in die der Kontaktbalken einführbar und damit in der Federklammer verklemmbar ist. Damit wird eine derartige Paneldose bereitgestellt, die auf einem Photovoltaik-Modul einfach und verläßlich installierbar ist.

## Beschreibung

Die Erfindung betrifft eine Paneldose, zum elektrischen Anschluß eines Photovoltaik-Moduls für eine Solaranlage, mit einer Anschlußeinrichtung zum elektrischen Anschließen eines Anschlußkabels und mit einer Verbindungseinrichtung zum elektrischen Kontaktieren einer Anschlußleitung des Photovoltaik-Moduls mit der Anschlußeinrichtung. Eine derartige Paneldose ist z. B. aus der EP 1 672 702 A1 bekannt.

Ein Photovoltaik-Modul besteht im allgemeinen aus zusammengeschalteten Solarzellen und wird auch Solarzellenpanel genannt. Die Ausgangsspannung eines einzelnen Photovoltaik-Moduls ist im allgemeinen zu gering, um elektrische Geräte zu betreiben, so daß in Solaranlagen mehrere Photovoltaik-Module zusammengeschaltet werden. Im allgemeinen werden die Photovoltaik-Module dabei in Reihe geschaltet. Dabei kann sich jedoch ein Problem ergeben, wenn ein Photovoltaik-Modul partiell abgeschattet wird. Bekanntermaßen erzeugt ein abgeschattetes Photovoltaik-Modul keine Spannung mehr und setzt dem Stromfluß praktisch eine Diode in Sperrichtung entgegen. Damit kann jedoch insgesamt kein Strom mehr fließen, so daß die Funktion der gesamten Anlage beeinträchtigt ist.

Um diesem Problem abzuhelfen, werden bei der Zusammenschaltung von Photovoltaik-Modulen zu einer Solaranlage in Paneldosen vorgesehene Bypass-Dioden verwendet, die antiparallel zu den Photovoltaik-Modulen geschaltet werden. Auf diese Weise wird erreicht, daß ein abgeschattetes Photovoltaik-Modul zwar keinen Anteil mehr zur Gesamtspannung der Solaranlage mehr leistet, der Stromfluß insgesamt jedoch trotzdem erhalten bleibt, so daß sich lediglich eine verminderte Betriebsspannung ergibt. Eine Beschädigung des abgeschatteten Photovoltaik-Moduls wird damit ebenfalls vermieden.

Bei herkömmlichen Paneldosen wird bisher derart vorgegangen, daß diese vollständig bestückt, also insbesondere mit wenigstens einer Bypass-Diode und mit Anschlußkabeln für das Photovoltaik-Modul versehen, auf diesem befestigt werden. Über einen abnehmbaren Deckel ist das Innere der Paneldose zugänglich, so daß Anschlußleitungen des Photovoltaik-Moduls angeschlossen werden können. Ferner erhält man auf diese Weise Zugang zu den Bypass-Dioden, die auf diese Weise bei einem Defekt gewechselt werden könnten.

In diesem Zusammenhang sei darauf hingewiesen, daß vorliegend mit "Anschlußleitung" eine Leitung gemeint ist, die direkt mit den Solarzellen verbunden ist und zum elektrischen Anschließen des Photovoltaik-Moduls aus diesem herausgeführt und dort weiter kontaktierbar ist. Im Gegensatz dazu ist vorliegend mit "Anschlußkabel" ein Kabel gemeint, das der Paneldose verbraucherseitig oder von einem anderen Photovoltaik-Modul her zugefiihrt ist und in der Paneldose weiter kontaktiert wird.

Ein Wechsel von Bypass-Dioden bei einer sich bereits im Betrieb befindlichen Solaranlage wird im allgemeinen jedoch nicht durchgeführt. Da sich die Photovoltaik-Module häufig an nur schlecht zugänglichen Orten, wie auf Häuserdächern, befinden, wäre ein Austausch sehr aufwendig und mitunter auch gefährlich. Auch ein Austausch der gesamten Paneldose ist nicht unproblematisch, da beim Wechsel der Dose häufig keine Abdichtung der Austrittsstellen der Anschlußleitungen des Photovoltaik-Moduls mehr gewährleistet werden kann.

Im Ergebnis wird daher bei einem Defekt in der Paneldose häufig das gesamte Photovoltaik-Modul ausgetauscht. Wenn damit auch ein zuverlässiger Weiterbetrieb der Solaranlage gewährleistet werden kann, so ist dies jedoch ineffizient und teuer.

Es ist die Aufgabe der Erfindung, eine derartige Paneldose anzugeben, die ein einfaches und verläßliches Kontaktieren der Anschlußleitung des Photovoltaik-Moduls mit der Anschlußeinrichtung ermöglicht.

Ausgehend von der eingangs beschriebenen Paneldose ist diese Aufgabe dadurch gelöst, daß die Anschlußeinrichtung als Kontaktbalken ausgebildet ist und daß die Verbindungseinrichtung als Federklammer ausgebildet ist, in die der Kontaktbalken einführbar und damit in der Federklammer verklemmbar ist.

Erfindungsgemäß ist also vorgesehen, daß zum elektrischen Anschließen des Photovoltaik-Moduls in der Paneldose eine Federklammer vorgesehen ist, in die ein Kontaktbalken einführbar und verklemmbar ist, was es ermöglicht, eine aus dem Photovoltaik-Modul herausgeführte Anschlußleitung mittels der Federklammer an den Kontaktbalken anzupressen. Zur Installation der erfindungsgemäßen Paneldose kann daher derart vorgegangen werden, daß zuerst die Dose mit der darin vorgesehenen Federklammer auf eine Anschlußleitung des Photovoltaik-Moduls aufgesetzt wird, wobei in einem zweiten Schritt der Kontaktbalken in die Federklammer eingeführt und in dieser verklemmt wird, womit es zur Anpressung der Anschlußleitung an den Kontaktbalken und damit zum eigentlichen elektrischen Anschluß kommt. Insgesamt wird dadurch nämlich die Kette "Anschlußkabel", "Anschlußeinrichtung", "Verbindungseinrichtung" und "Anschlußleitung" geschlossen; der elektrische Anschluß des Photovoltaik-Moduls über ein Anschlußkabel ist hergestellt.

Gemäß einer bevorzugten Weiterbildung der Erfindung ist vorgesehen, daß mittels der Federklammer die Anschlußleitung an den Kontaktbalken anpreßbar ist.

Grundsätzlich kann vorgesehen sein, daß der Kontaktbalken aus der Federklammer nicht mehr lösbar ist. Gemäß einer bevorzugten Weiterbildung der Erfindung ist jedoch vorgesehen, daß der Kontaktbalken in der Federklammer lösbar verklemmbar ist, insbesondere ohne ein Werkzeug. Dies ermöglicht eine einfache Deinstallation, um z. B. eine Komponente der Paneldose auszutauschen.

Der Kontaktbalken kann unterschiedlichen Formen folgen. Insbesondere sind im Querschnitt mehreckige, wie quadratische, Formen möglich. Gemäß einer bevorzugten Weiterbildung der Erfindung ist jedoch vorgesehen, daß der Kontaktbalken im Querschnitt rund oder oval ausgebildet ist. Dies erleichtert das Einführen des Kontaktbalkens in die Federklammer und das Lösen desselben aus dieser.

Grundsätzlich kann der Kontaktbalken als massiver Stab ausgestaltet sein. Gemäß einer bevorzugten Weiterbildung der Erfindung ist jedoch vorgesehen, daß der Kontaktbalken als Röhrchen ausgebildet ist, in das eine Leiterader des Anschlußkabels einführbar und damit in dem Röhrchen elektrisch kontaktierbar ist. Gemäß einer bevorzugten Weiterbildung der Erfindung ist in diesem Zusammenhang auch vorgesehen, daß ein Anschlußkabel bereitgestellt ist, das eine in dem Röhrchen verkrimpte Leiterader aufweist.

Grundsätzlich kann das Röhrchen ein über seine Längserstreckung gleichbleibendes Lumen aufweisen. Gemäß einer bevorzugten Weiterbildung der Erfindung ist jedoch vorgesehen, daß das Röhrchen zur Erleichterung der Einführung einer Leiterader des Anschlußkabels einen erweiterten Öffnungsbereich aufweist. Dieser erweiterte Öffnungsbereich kann rund aber auch eckig sein. Im Fall, daß dieser erweiterte Öffnungsbereich eckig ausgebildet ist, z. B. quadratisch, kann er als Verdrehschutz dienen, indem er in eine passende Ausnehmung in der Paneldose eingeführt ist.

Grundsätzlich kann ein z. B. als Röhrchen ausgebildeter Kontaktbalken auf unterschiedliche Weise in der Paneldose befestigt sein. Gemäß einer bevorzugten Weiterbildung der Erfindung ist jedoch vorgesehen, daß das Röhrchen in einem Trägerelement gehalten ist, das seinerseits lösbar in der Paneldose befestigbar ist. Vorzugsweise weist das Trägerelement Ausnehmungen auf, in denen das Röhrchen verrastbar ist. Um einen Verdrehschutz der Röhrchen zu gewährleisten und um außerdem eine einfache Anschlußmöglichkeit für Bypass-Dioden zur Verfügung zu stellen, kann das Röhrchen gemäß einer bevorzugten Weiterbildung der Erfindung eine Abflachung aufweisen. Ist ein Trägerelement vorgesehen, so kann diese Abflachung vorzugsweise im Bereich des Trägerelements vorgesehen sein. Im Bereich dieser Abflachung kann dann auf einfache und verläßliche Weise eine Bypass-Diode durch Verlöten oder Verschweißen befestigt werden.

Gemäß einer bevorzugten Weiterbildung der Erfindung ist ferner vorgesehen, daß die Paneldose eine zur Befestigung auf dem Photovoltaik-Modul vorgesehene Befestigungsseite aufweist und auf der Befestigungsseite ein Boden mit einer Durchgangsöffnung für die Anschlußleitung des Photovoltaik-Moduls vorgesehen ist, wobei die Federklammer oberhalb der Durchgangsöffnung angeordnet ist. Vorzugsweise ist dabei in der Durchgangsöffnung eine Umlenkzunge vorgesehen, die derart angeordnet und ausgebildet ist, daß die Anschlußleitung beim Einführen in die Durchgangsöffnung umgelenkt wird und vorzugsweise die Federklammer kontaktiert.

Vorzugsweise ist die Umlenkzunge derart ausgebildet und angeordnet, daß sie eine Umlenkung der Anschlußleitung beim Einführen in die Durchgangsöffnung in einem Winkelbereich von 10° bis 80°, vorzugsweise von 30° bis 60°, bewirkt. Diese Umlenkzunge bewirkt, daß eine im allgemeinen in Form eines Leiterbandes vorliegende Anschlußleitung, die im wesentlichen senkrecht aus einem Photovoltaik-Modul austritt, beim Einführen in die Durchgangsöffnung um einen entsprechenden Winkel umgelenkt wird.

Eine Verbindung der Anschlußleitung des Photovoltaik-Moduls mit dem Röhrchen kann dadurch erfolgen, daß das Röhrchen in einer Richtung senkrecht zu seiner Längserstreckung in die Federklammer eingesetzt wird. Auf diese Weise erfolgt eine verläßliche Kontaktierung einer Anschlußleitung des Photovoltaik-Moduls direkt mit dem Röhrchen. Dies bedeutet auch, daß die Federklammer selbst keinen besonderen Anforderungen hinsichtlich ihrer elektrischen Leitfähigkeit entsprechen muß, so daß sie vorzugsweise aus einfachem Federbandstahl hergestellt ist.

Grundsätzlich kann die Paneldose einteilig oder mehrteilig ausgestaltet sein. Gemäß einer bevorzugten Weiterbildung der Erfindung ist vorgesehen, daß die Paneldose ein Basisteil zum Anbringen auf dem Photovoltaik-Modul und elektrischen Anschließen der Anschlußleitung des Photovoltaik-Moduls und ein wenigstens eine elektrische oder elektronische Funktionseinrichtung aufweisendes Funktionsteil zum Aufsetzen auf das Basisteil aufweist. Diesbezüglich ist gemäß einer bevorzugten Weiterbildung der Erfindung ferner vorgesehen, daß das Funktionsteil die Anschlußeinrichtung zum elektrischen Anschließen des Anschlußkabels aufweist und das Basisteil die Verbindungseinrichtung zum elektrischen Kontaktieren der Anschlußleitung des Photovoltaik-Moduls mit der Anschlußeinrichtung aufweist.

Auf diese Weise wird es möglich, daß das Basisteil lediglich die Basis zum Anschließen wenigstens einer Anschlußleitung des Photovoltaik-Moduls und zum Befestigen des Funktionsteils an dem Photovoltaik-Modul darstellt, wobei eine eine elektrische oder/und elektronische Funktion übernehmende Funktionseinrichtung dabei nicht Bestandteil des Basisteils sein muß. Eine derartige Funktionseinrichtung ist vielmehr in dem auf dem Basisteil befestigbaren Funktionsteil vorgesehen, so daß im Falle eines Defekts der Funktionseinrichtung das Funktionsteil insgesamt auf einfache Weise gewechselt werden kann. Ein Wechsel des an dem Basisteil befestigten Funktionsteils ist relativ einfach möglich, so daß dies auch an schwierig zugänglichen Stellen, wie auf Häuserdächern, verläßlich durchgeführt werden kann. Insbesondere ist dabei vorzugsweise auch vorgesehen, daß das Basisteil zumindest kein Anschlußkabel aufweist, was die Installation auf dem Photovoltaik-Modul, insbesondere bei Automatisierung derselben, erheblich erleichtert.

Grundsätzlich ist es möglich, das Funktionsteil auf verschiedene Weisen auf dem Photovoltaik-Modul zu befestigen. Gemäß einer bevorzugten Weiterbildung der Erfindung ist jedoch vorgesehen, daß das Funktionsteil ausschließlich mittels des Basisteils an dem Photovoltaik-Modul befestigbar ist. Dies hat den Vorteil, daß am Photovoltaik-Modul selbst nach Anbringung des Basisteils keine Maßnahmen mehr vorgenommen werden müssen, um die Paneldose vollständig zu befestigen. Vielmehr stellt das Basisteil alle erforderlichen Funktionen hinsichtlich Befestigung und elektrischem Anschluß bereit, so daß Anschluß und Befestigung auch zu keiner Beschädigung des Photovoltaik-Moduls führen können.

Grundsätzlich kann das Funktionsteil unterschiedlichen geometrischen Formen folgen. Gemäß einer bevorzugten Weiterbildung der Erfindung ist jedoch vorgesehen, daß das Funktionsteil als Haube ausgebildet ist. Auf diese Weise stellt das Funktionsteil praktisch ein mit einem Deckel verschließbares Gehäuse dar, so daß insbesondere aufgrund der Seitenwände der Haube ein guter Schutz der in dem Funktionsteil vorgesehenen Funktionseinrichtungen bei Herstellung, Transport und Installation gewährleistet ist. Die Funktion des Deckels übernimmt dann das auf dem Photovoltaik-Modul befestigte Basisteil. Insbesondere ist gemäß einer bevorzugten Weiterbildung der Erfindung dabei vorgesehen, daß durch Aufsetzen des Funktionsteils auf das Basisteil die Paneldose verschließbar ist, insbesondere in hermetisch dichter Form.

Darüber hinaus ist gemäß einer bevorzugten Weiterbildung der Erfindung vorgesehen, daß die Höhe des Funktionsteils in einem Randbereich geringer ist als in seinem restlichen Bereich, das Funktionsteil also einen Absatz aufweist. Auf diese Weise kann die Paneldose z. B. zumindest teilweise unter einen das Photovoltaik-Modul begrenzenden Metallrahmen geschoben werden, so daß eine möglichst randnahe und damit platzsparende Installation auf dem Photovoltaik-Modul erzielt wird.

Ein bei Photovoltaik-Modulen problematischer Punkt ist die Abdichtung des Bereichs, in dem die Anschlußleitungen aus dem Photovoltaik-Modul heraustreten. Im allgemeinen muß dort zum Herausführen der Anschlußleitungen eine Schutzschicht verletzt werden, so daß grundsätzlich die Problematik des Eindringens von Feuchtigkeit besteht, die das Photovoltaik-Modul beschädigen kann. Insofern stellt sich auch die Aufgabe, auf sichere und einfache Weise eine feuchtigkeitsdichte Abdichtung des Bereichs des Photovoltaik-Moduls zu erzielen, in dem eine Anschlußleitung heraustritt. Gemäß einer bevorzugten Weiterbildung der Erfindung ist dazu vorgesehen, daß das Basisteil auf seiner zur Anbringung auf dem Photovoltaik-Modul vorgesehenen Seite einen Boden mit einer vergießbaren, dem Photovoltaik-Modul zugewandten Ausnehmung aufweist.

Gemäß diesem Aspekt wird also eine derartige Paneldose bereitgestellt, die eine sichere Abdichtung des Bereichs des Photovoltaik-Moduls gewährleisten kann, in dem eine Anschlußleitung aus dem Photovoltaik-Modul heraustritt. Dazu wird die Paneldose entsprechend positioniert, und die Ausnehmung wird entsprechend in abdichtender Weise mit einem Dichtmaterial vergossen.

Zum Vergießen der Ausnehmung sind grundsätzlich alle bekannten Spritz- und Gießverfahren einsetzbar. Dabei ist es gemäß einer bevorzugten Weiterbildung der Erfindung vorgesehen, daß die vergießbare Ausnehmung derart angeordnet ist, daß bei auf dem Photovoltaik-Modul angebrachtem Basisteil auch der Austrittsbereich der Anschlußleitung aus dem Photovoltaik-Modul vergießbar ist. Wesentlich ist dies insbesondere, wenn eine Mehrzahl von Anschlußleitungen vorgesehen ist, so daß dann eine entsprechend ausgestaltete gemeinsame vergießbare Ausnehmung vorgesehen ist oder mehrere vergießbare Ausnehmungen vorgesehen sind, die insgesamt alle Austrittsbereiche der Anschlußleitungen abdecken.

Grundsätzlich kann es ausreichend sein, daß die geometrische Anordnung einer vergießbaren Ausnehmung bzw. einer Mehrzahl von vergießbaren Ausnehmungen sich an den Austrittsbereichen der Anschlußleitungen aus dem Photovoltaik-Modul orientiert. Gemäß einer bevorzugten Weiterbildung der Erfindung ist jedoch ferner vorgesehen, daß die vergießbare Ausnehmung auch eine in dem Boden des Basisteils vorgesehene Durchgangsöffnung für die Anschlußleitung des Photovoltaik-Moduls umfaßt. Auf diese Weise wird erreicht, daß die Durchgangsöffnung zumindest teilweise mitausgegossen wird, so daß eine optimale Abdichtungsfunktion erzielt wird. Insbesondere kann dabei, aber auch grundsätzlich bei allen vorgenannten Ausführungsformen, vorgesehen sein, daß die jeweilige Durchgangsöffnung genau über dem Austrittsbereich der Anschlußleitung des Photovoltaik-Moduls angeordnet ist, was eine besonders einfache und insbesondere auch automatisierte Einführung der Anschlußleitung in das Basisteil der Paneldose ermöglicht.

Weiterhin ist es bei Paneldosen problematisch, daß diese mitunter starken mechanischen Belastungen ausgesetzt sind, nämlich sowohl bei Transport und Installation als auch bei ihrem Einsatz im Betrieb der Solaranlage. Insbesondere bei sehr tiefen Temperaturen werden typische für Paneldosen verwendete Kunststoffmaterialien häufig spröde, so daß schon moderate Stöße zu einer Beschädigung der Paneldose führen können.

Es ist daher auch die Aufgabe der Erfindung, eine derartige Paneldose anzugeben, die gegen Stöße möglichst unempfindlich ist.

Ausgehend von der eingangs beschriebenen Paneldose ist diese Aufgabe dadurch gelöst, daß zur Abdichtung der Paneldose zwischen dem Basisteil und dem weiteren Teil eine Dichtung vorgesehen ist, die derart ausgebildet und angeordnet ist, daß ein auf das weitere Teil ausgeübter Stoß abgefedert wird.

Diese erfindungsgemäße Lösung kann sowohl für die eingangs genannte Paneldose als auch für alle zuvor genannten Ausgestaltungen dieser Paneldose vorgesehen sein.

Gemäß diesem Aspekt der Erfindung wirkt die Dichtung also nicht nur zur Abdichtung des Innenraums der Paneldose vor z. B. Feuchtigkeit, sondern gewährleistet auch einen mechanischen Schutz. Wird das auf das Basisteil aufgesetzte Teil nämlich von einem Stoß getroffen, so wird dieser mittels der Dichtung abgefedert, was insbesondere bei aufgrund von tiefen Temperaturen spröde gewordenem Material des weiteren Teils einer Beschädigung desselben aber auch der Paneldose insgesamt sowie der darin enthaltenen Bauteile entgegenwirken kann.

Gemäß einer bevorzugten Weiterbildung der Erfindung ist dabei vorgesehen, daß die Dichtung seitlich gegen Seitenwände des weiteren Teils abdichtet und das weitere Teil Rippen aufweist, mit denen es derart auf der Dichtung aufliegt, daß sich die Seitenwände im Abstand zum Basisteil befinden. Auf diese Weise ergibt sich eine federnde Lagerung des weiteren Teils auf dem Basisteil, bei dem die Abdichtungsfunktion, die seitlich wirkt, gegenüber der Federfunktion, die senkrecht dazu wirkt, funktional getrennt sind. Damit wird die Abdichtfunktion durch die zusätzliche Federfunktion nicht beeinträchtigt.

Nachfolgend wird die Erfindung anhand eines bevorzugten Ausführungsbeispiels unter Bezugnahme auf die Zeichnung im Detail erläutert. In der Zeichnung zeigt
- Fig. 1: eine Paneldose gemäß einem bevorzugten Ausführungsbeispiel der Erfindung mit einem Basisteil und einem darauf aufgesetzten Funktionsteil,
- Fig. 2: das Funktionsteil der Paneldose gemäß dem bevorzugten Ausführungsbeispiel der Erfindung mit Funktionseinrichtungen,
- Fig. 3: das Basisteil der Paneldose gemäß dem bevorzugten Ausführungsbeispiel der Erfindung,

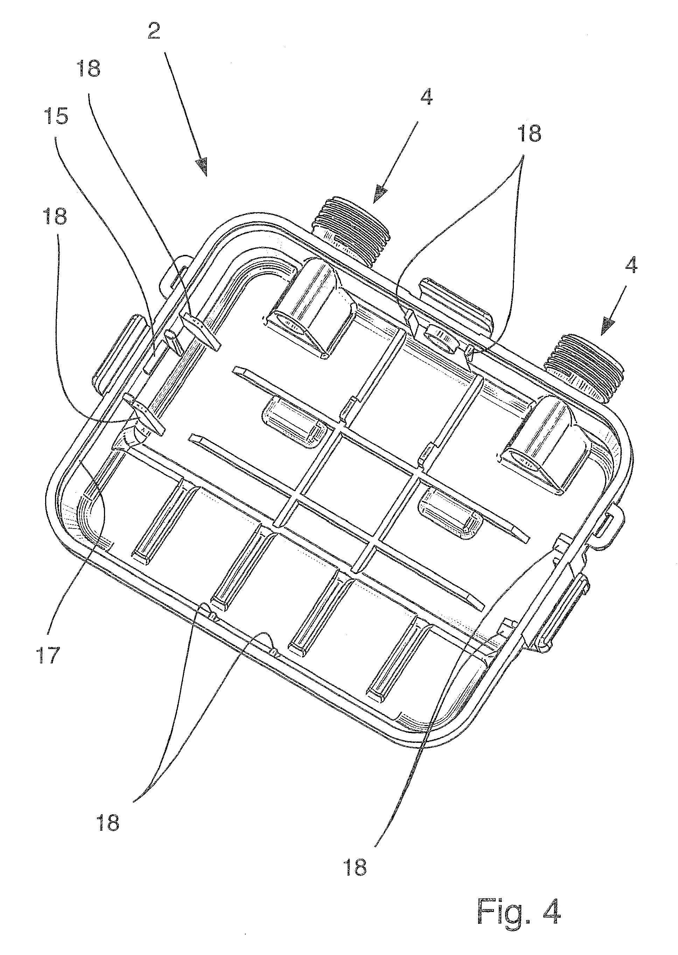

- Fig. 4: das Funktionsteil der Paneldose gemäß dem bevorzugten Ausführungsbeispiel der Erfindung ohne zusätzliche Einrichtungen,
- Fig. 5: die Trägereinrichtung mit den darin angeordneten Anschlußeinrichtungen der Paneldose gemäß dem bevorzugten Ausführungsbeispiel der Erfindung und
- Fig. 6: das Basisteil der Paneldose gemäß dem bevorzugten Ausführungsbeispiel der Erfindung von seiner zur Befestigung auf einem Photovoltaik-Modul vorgesehenen Seite her.

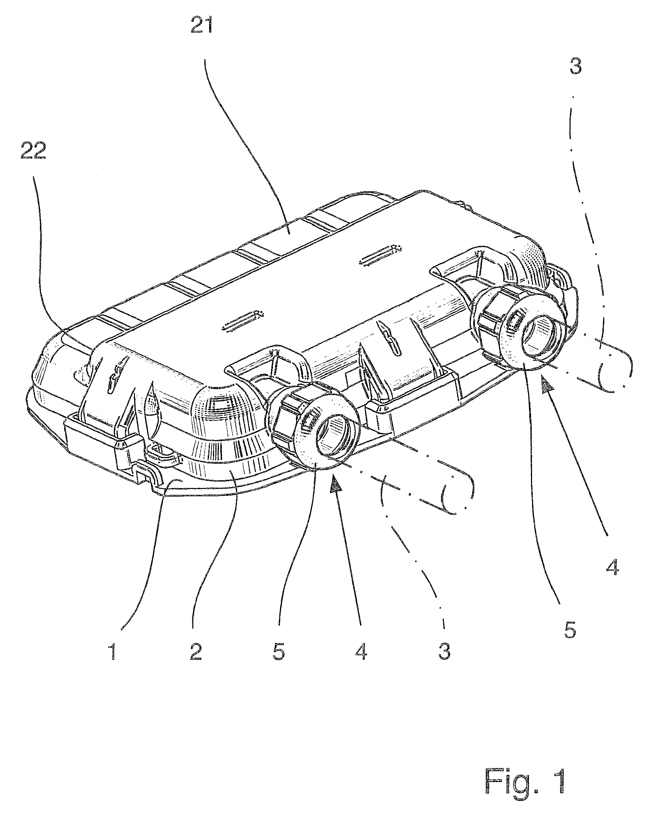

Aus Fig. 1 ist in zusammengesetztem Zustand eine Paneldose gemäß einem bevorzugten Ausführungsbeispiel der Erfindung in perspektivischer Darstellung ersichtlich. Diese Paneldose dient zum elektrischen Anschluß eines nicht weiter dargestellten Photovoltaik-Moduls einer Solaranlage, wobei ein Basisteil 1 zum Anbringen auf dem Photovoltaik-Modul und zum elektrischen Anschließen einer ebenfalls nicht weiter dargestellten Anschlußleitung des Photovoltaik-Moduls und als weiteres Teil ein Funktionsteil 2 vorgesehen sind, das auf das Basisteil 1 aufgesetzt ist.

Das Funktionsteil 2 weist mehrere Funktionseinrichtungen auf, die jeweils eine elektrische oder/und elektronische Funktion übernehmen. Derartige Funktionseinrichtungen stellen vorliegend z. B. zwei Anschlußkabel 3 dar, mittels derer das Photovoltaik-Modul über die Paneldose elektrisch angeschlossen werden kann. Diese Anschlußkabel 3 sind über Kabeleinführungsöffnungen 4 in das Funktionsteil 2 der Paneldose eingeführt. Als Zugentlastung ist jeweils eine Kabelverschraubung 5 vorgesehen, die auf die Isolierung des Anschlußkabels 3 wirkt.

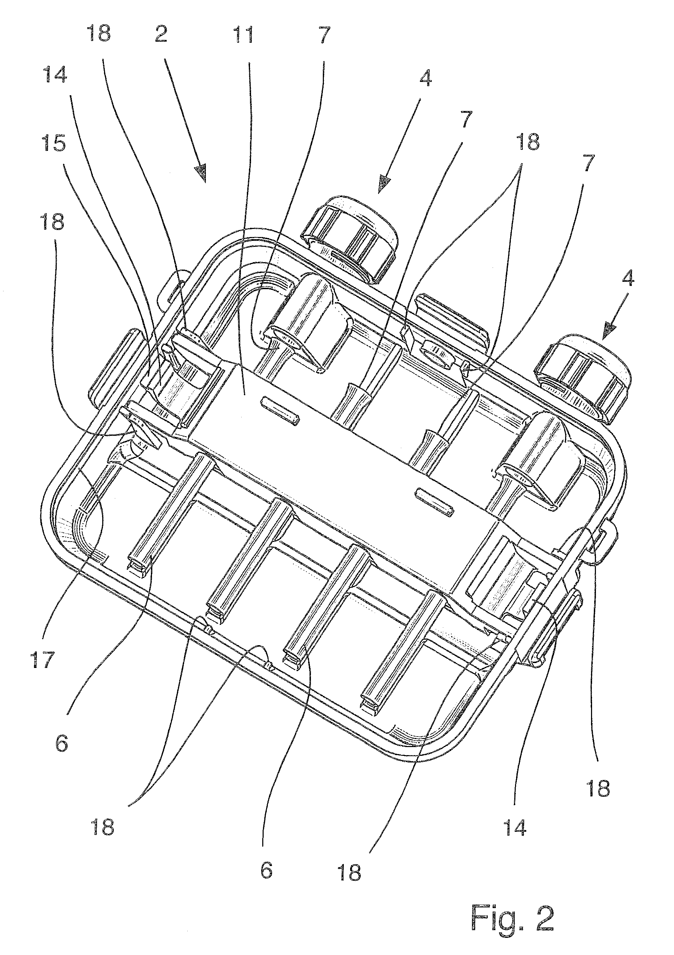

Als jeweils eine elektrische Funktion übernehmende Funktionseinrichtungen sind ferner Anschlußeinrichtungen 6 in Form von Röhrchen vorgesehen. Diese Röhrchen weisen jeweils an einem Ende einen erweiterten Öffnungsbereich 7 auf, wie insbesondere Fig. 2 entnehmbar. Dabei sind zwei dieser Anschlußeinrichtungen 6 mit ihrem erweiterten Öffnungsbereich 7 jeweils so angeordnet, daß eine Leitungsader eines durch die Kabeleinführungsöffnung 4 eingeführten Anschlußkabels 3 auf einfache und sichere Weise in das Innere der Röhrchen einführbar ist. Ein elektrischer Kontakt zwischen der Leitungsader und dem Röhrchen sowie ein Halten der Leitungsader in dem Röhrchen kann dann mittels Verkrimpen erfolgen.

Ein derartiges Verkrimpen ist auch im Rahmen einer automatisierten Bestückung des Funktionsteils 2 mittels eines Roboters gut handhabbar. Zur Sicherstellung, daß bei einer solchen automatisierten Bestückung die Leiterader des Anschlußkabels 3 tatsächlich in das Röhrchen eingeführt worden ist, sind im übrigen optische Verfahren anwendbar, die z.B. einen Spalt zwischen der Kabeleinführungsöffnung 4 und dem erweiterten Öffnungsbereich 7 des Röhrchens daraufhin überwachen, ob die Isolierung der Leiterader sichtbar wird.

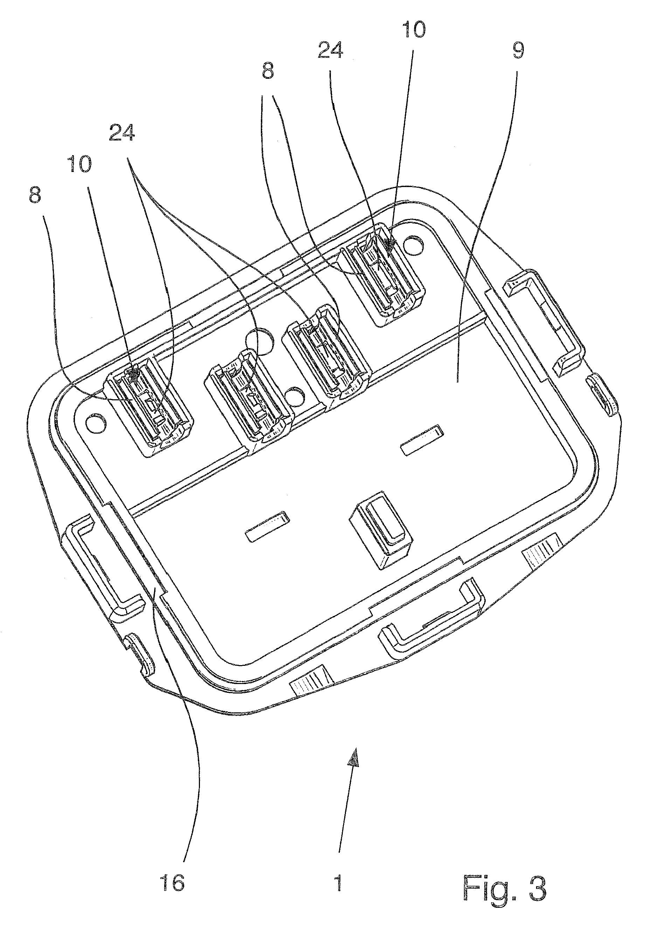

Aus Fig. 3 ist das Basisteil 1 der Paneldose gemäß dem bevorzugten Ausführungsbeispiel der Erfindung vor Aufsetzen des Funktionsteils 2 ersichtlich. Das Basisteil 1 weist vier Federklammern 8 auf. Diese Federklammern 8 sind jeweils oberhalb einer in dem Boden 9 des Basisteils 1 vorgesehenen Durchgangsöffnung 10 angeordnet. Die Anordnung der Durchgangsöffnungen 10 zueinander ist derartig, daß diese sich jeweils oberhalb des Austrittsbereichs einer jeweiligen Anschlußleitung des Photovoltaik-Moduls befinden. Bei entsprechender Vorbereitung der Anschlußleitungen des Photovoltaik-Moduls kann das Basisteil 1 damit derart auf das Photovoltaik-Modul aufgesetzt werden, daß die Anschlußleitungen des Photovoltaik-Moduls, die häufig in Form von dünnen Flachbändern ausgestaltet sind, automatisch durch die Durchgangsöffnungen 10 eingeführt werden.

In jeder Durchgangsöffnungen 10 ist jeweils eine Umlenkzunge 24 vorgesehen, die dafür sorgt, daß eine im allgemeinen in Form eines Leiterbandes vorliegende Anschlußleitung, die im wesentlichen senkrecht aus einem Photovoltaik-Modul austritt, um einen Winkel von ca. 45° beim Einführen in die Durchgangsöffnung 10 umgelenkt wird. Eine Verbindung der Anschlußleitungen des Photovoltaik-Moduls mit den Anschlußeinrichtungen 6 des Funktionsteils 2 in Form von Röhrchen erfolgt nun beim Aufsetzen des Funktionsteils 2 auf das Basisteil 1, indem die Röhrchen in einer Richtung senkrecht zu ihrer Längserstreckung in die als Federklammern ausgebildete Verbindungseinrichtungen 8 eingesetzt werden. Mittels der Federklammern werden die Flachbänder damit auf verläßliche Weise direkt mit den Röhrchen kontaktiert, so daß die Verbindungseinrichtungen 8 selbst keinen besonderen Anforderungen an die elektrische Leitfähigkeit genügen müssen, insbesondere also aus einfachem Federbandstahl hergestellt sein können. Dabei gewährleisten die Umlenkzungen 24, daß die Flachbänder nicht einfach nach unten weggedrückt werden können, da die Flachbänder wegen der Umlenkzungen 24 im allgemeinen bereits schon seitlich an den Federklammern anliegen.

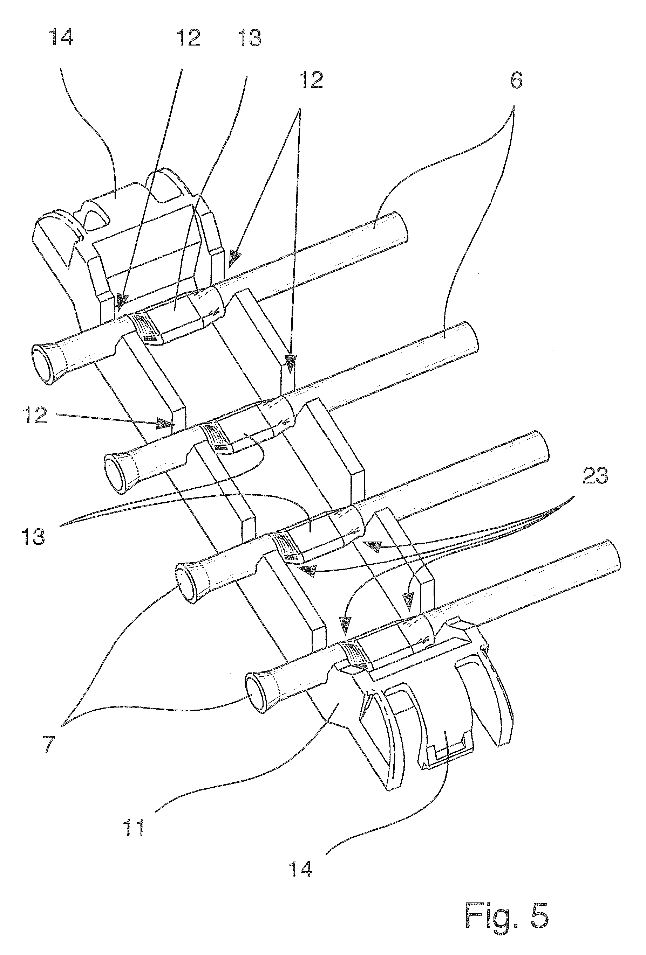

Um die Anschlußeinrichtungen 6 in Form von Röhrchen in dem Funktionsteil 2 zu halten, ist ein Trägerelement 11 vorgesehen, wie aus Fig. 2 und im Detail aus Fig. 5 ersichtlich. Dieses Trägerelement 11 weist Ausnehmungen 12 auf, in denen die Anschlußeinrichtungen 6 verrastet sind. Um einen Verdrehschutz der Anschlußeinrichtungen 6 zu gewährleisten und um darüber hinaus eine einfache Anschlußmöglichkeit für nicht weiter dargestellte Bypass-Dioden bereitzustellen, sind die Anschlußeinrichtungen 6 im Bereich des Trägerelements 11 jeweils mit einer Abflachung 13 versehen. Im Bereich dieser Abflachung 13 kann auf einfache und verläßliche Weise eine Bypass-Diode durch Verlöten oder Verschweißen befestigt werden. Diese Art der Befestigung ermöglicht es im übrigen auch, ganz unterschiedliche Typen von Bypass-Dioden zu verwenden.

Als Verdrehschutz kann auch vorgesehen sein, daß die weiter oben beschriebenen erweiterten Öffnungsbereiche 7 der Röhrchen nach außen hin nicht kreisrund sondern eckig, z.B. quadratisch, ausgebildet, sind. Sind die entsprechenden Enden der Röhrchen in passende Ausnehmungen eingeführt, wird der genannte Verdrehschutz erreicht. Das gesamte Trägerelement 11 ist im übrigen derart ausgestaltet, daß es mittels Federhaken 14 und diesen entsprechenden Vorsprüngen 15 im Funktionsteil 2 lösbar befestigt werden kann.

Damit wird die Möglichkeit erzielt, das Funktionsteil 2 der Paneldose mit all seinen Funktionseinrichtungen, wie Bypass-Dioden, Anschlußkabeln 3 und Anschlußeinrichtungen 6, vollständig vorzukonfigurieren und elektrisch "endzuprüfen", so daß auf ein an dem Photovoltaik-Modul angebrachtes Basisteil 1 nur noch dieses vorkonfektionierte Funktionsteil 2 aufgesetzt werden muß, ohne daß weitere Arbeiten erfolgen müssen. Dies ist insbesondere insofern vorteilhaft, als daß, wie oben schon angedeutet, die Photovoltaik-Module einer Solaranlage im allgemeinen an nur schwer und gegebenenfalls auch unter Gefahr zugänglichen Bereichen angeordnet sind, wie auf Hausdächern, so daß auf diese Weise die dort zu erfolgende Arbeit auf ein Minimum reduziert wird. Insbesondere kann dazu das Basisteil 1 nämlich auch schon auf dem Photovoltaik-Modul vorinstalliert sein

Wie aus Fig. 3 ersichtlich, weist das Basisteil 1 eine umlaufende Dichtung 16 auf. Wird das Funktionsteil 2 auf das Basisteil 1 aufgesetzt, so wirkt die Dichtung 16 seitlich gegen die Seitenwände 17 des Funktionsteils 2. Dabei kommt das Funktionsteil 2 jedoch nicht direkt mit dem Basisteil 1 in Kontakt, da das Funktionsteil 2 Rippen 18 aufweist, mit denen es auf der Dichtung 16 aufliegt. Damit ergibt sich eine federnde Lagerung des Funktionsteils 2 auf dem Basisteil 1, so daß ein auf das Funktionsteil 2 einwirkender Stoß durch die Dichtung 16 in gewissem Maße abgefedert wird. Insbesondere bei tiefen Temperaturen und entsprechend sprödem Material können auf diese Weise unter Umständen Beschädigungen des Funktionsteils 2 und seiner Komponenten aber auch des Basisteils 1 bei entsprechender mechanischer Belastung vermieden werden.

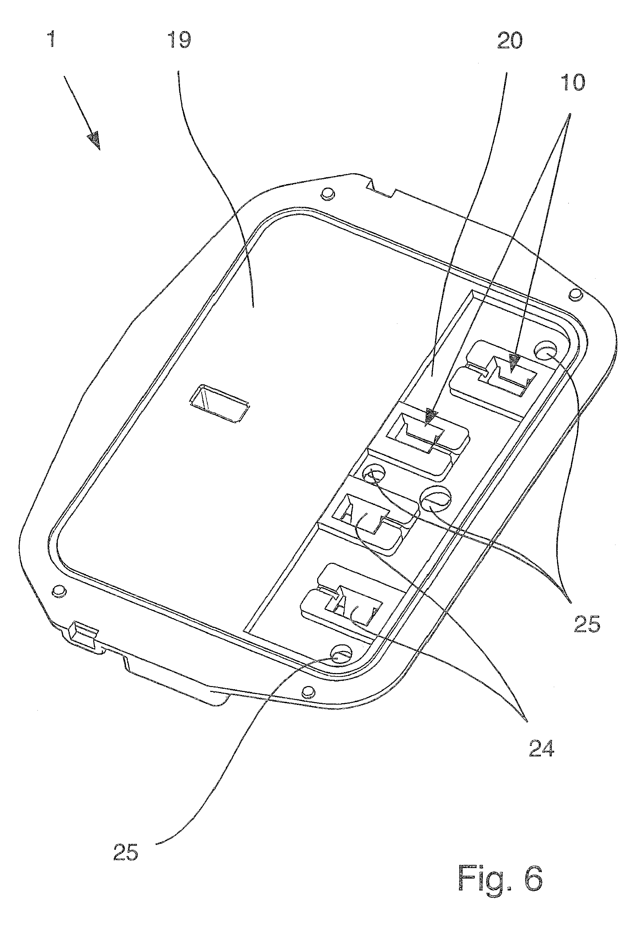

Aus Fig. 6 ist die zur Anbringung auf dem Photovoltaik-Modul vorgesehene Seite des Basisteils 1 ersichtlich. Auf seiner zur Anbringung auf dem Photovoltaik-Modul vorgesehenen Seite weist das Basisteil 1 einen Boden 19 auf, in dem eine vergießbare, dem Photovoltaik-Modul zugewandte Ausnehmung 20 vorgesehen ist. Diese Ausnehmung ist derart angeordnet, daß bei auf dem Photovoltaik-Modul angebrachtem Basisteil 1 der Austrittsbereich der Anschlußleitungen aus dem Photovoltaik-Modul vergießbar ist. Da beim Herausführen der Anschlußleitungen aus dem Photovoltaik-Modul eine Schutzschicht, die auch zur Abdichtung des Photovoltaik-Moduls dient, verletzt wird, kann auf diese Weise sichergestellt werden, daß die Abdichtung des Photovoltaik-Moduls erhalten bleibt und keine Feuchtigkeit eindringt. Vorliegend ist dabei vorgesehen, daß die vergießbare Ausnehmung 20 auch die in dem Boden 19 des Basisteils 1 vorgesehenen Durchgangsöffnungen 10 umfaßt, so daß die Durchgangsöffnungen 10 mitausgegossen und damit abgedichtet werden. Um die Vergießbarkeit der Ausnehmung 20 auch bei auf dem Photovoltaik-Modul aufgesetztem Basisteil 1 zu gewährleisten, sind im Boden 19 das Basisteils zusätzliche Öffnungen 25 vorgesehen, die zum Zuführen des Vergießmittels bzw. als Steiger verwendet werden können.

Damit die Paneldose teilweise z.B. unter einen das Photovoltaik-Modul begrenzenden Metallrahmen geschoben werden kann, so daß eine möglichst randnahe und damit platzsparende Installation auf dem Photovoltaik-Modul erzielt wird, ist die Höhe des Funktionsteils 2 in einem Randbereich 21 geringer ist als in seinem restlichen Bereich. Das Funktionsteil weist also einen Absatz 22 auf. Damit ist auch verbunden, daß gemäß dem vorliegend beschriebenen bevorzugten Ausführungsbeispiel der Erfindung die als Röhrchen vorgesehenen Anschlußeinrichtungen 6 nicht gerade verlaufen, sondern einen Bereich 23 aufweisen, in dem eine Achsverschiebung vorgesehen ist.

## Patentansprüche

1. Paneldose, zum elektrischen Anschluß eines Photovoltaik-Moduls für eine Solaranlage, mit einer Anschlußeinrichtung (6) zum elektrischen Anschließen eines Anschlußkabels (3) und mit einer Verbindungseinrichtung (8) zum elektrischen Kontaktieren einer Anschlußleitung des Photovoltaik-Moduls mit der Anschlußeinrichtung (6), **dadurch gekennzeichnet, daß** die Anschlußeinrichtung (6) als Kontaktbalken ausgebildet ist und daß die Verbindungseinrichtung (8) als Federklammer ausgebildet ist, in die der Kontaktbalken einführbar und damit in der Federklammer verklemmbar ist.

2. Paneldose nach Anspruch 1, **dadurch gekennzeichnet, daß** der Kontaktbalken als Röhrchen ausgebildet ist, in das eine Leiterader des Anschlußkabels (3) einführbar und damit mit dem Röhrchen elektrisch kontaktierbar ist.

3. Paneldose nach Anspruch 1 oder 2, **dadurch gekennzeichnet, daß** eine zur Befestigung auf dem Photovoltaik-Modul vorgesehene Befestigungsseite vorgesehen ist und auf der Befestigungsseite ein Boden (19) mit einer Durchgangsöffnung (10) für die Anschlußleitungen des Photovoltaik-Moduls vorgesehen ist, wobei die Federklammer oberhalb der Durchgangsöffnung (10) vorgesehen ist.

4. Paneldose nach Anspruch 3, **dadurch gekennzeichnet, daß** in der Durchgangsöffnung (10) eine Umlenkzunge (24) vorgesehen ist, die derart angeordnet und ausgebildet ist, daß die Anschluß leitung beim Einführen in die Durchgangsöffnung (10) umgelenkt wird und vorzugsweise die Federklammer kontaktiert.

5. Paneldose nach einem der Ansprüche 1 bis 4, **dadurch gekennzeichnet, daß** ein Basisteil (1) zum Anbringen auf dem Photovoltaik-Modul und zum elektrischen Anschließen der Anschlußleitung des Photovoltaik-Moduls und ein Funktionsteil (2) mit elektrischen und/oder elektronischen Funktionseinrichtungen zum Aufsetzen auf das Basisteil (1) vorgesehen ist.

6. Paneldose nach Anspruch 5, **dadurch gekennzeichnet, daß** das Funktionsteil (2) die Anschlußeinrichtung (6) zum elektrischen Anschließen des Anschlußkabels (3) aufweist und das Basisteil (1) die Verbindungseinrichtung (8) zum elektrischen Kontaktieren der Anschlußleitung des Photovoltaik-Moduls mit der Anschlußeinrichtung (6) aufweist.

7. Paneldose nach Anspruch 5 oder 6, **dadurch gekennzeichnet, daß** das Funktionsteil (2) ausschließlich mittels des Basisteils (1) an dem Photovoltaik-Modul befestigbar ist.

8. Paneldose nach einem der Ansprüche 5 bis 7, **dadurch gekennzeichnet, daß** das Basisteil (1) auf seiner zur Anbringung auf dem Photovoltaik-Modul vorgesehenen Seite einen Boden (19) mit einer vergießbaren, dem Photovoltaik-Modul zugewandten Ausnehmung (20) aufweist.

9. Paneldose, zum elektrischen Anschluß eines Photovoltaik-Moduls für eine Solaranlage, mit einem Basisteil (1) zum Anbringen auf dem Photovoltaik-Modul und zum elektrischen Anschließen einer Anschlußleitung des Photovoltaik-Moduls und mit einem wenigstens eine elektrische und/oder elektronische Funktionseinrichtung aufweisenden Funktionsteil (2), insbesondere nach einem der vorhergehenden Ansprüche, **dadurch gekennzeichnet, daß** zur Abdichtung der Paneldose zwischen dem Basisteil (1) und dem Funktionsteil (2) eine Dichtung (16) vorgesehen ist, die derart ausgebildet und angeordnet ist, daß ein auf das Funktionsteil (2) ausgeübter Stoß abgefedert wird.

10. Paneldose nach Anspruch 9, **dadurch gekennzeichnet, daß** die Dichtung (16) seitlich gegen die Seitenwände (17) des Funktionsteils (2) abdichtet und das Funktionsteil (2) Rippen (18) aufweist, mit denen es derart auf der Dichtung (16) aufliegt, daß sich die Seitenwände (17) des Funktionsteils (2) im Abstand zum Basisteil (1) befinden.
